# DEMANDE DE BREVET EUROPEEN

(11) **EP 1 136 714 A1**
(43) Date de publication de la demande: **26.09.2001**
(21) Numéro de dépôt: 00870053.6
(22) Date de dépôt: 24.03.2000
(51) Int. Cl.: F16D 3/84

(54) **Gaine souple universelle à soufflet**

(71) Demandeur: Tech-Auto S.A., 8824 Bigonville (LU)
(72) Inventeur:
(74) Mandataire: Van Malderen, Michel

(57) **Abrégé**

La présente invention se rapporte à une gaine souple universelle à soufflet pour joint articulé lubrifié (12), de préférence de type cardan, destiné à assurer la protection et à garantir la lubrification dudit joint, ladite gaine consistant en un élément tubulaire comprenant un soufflet central tronconique (1) et des zones de fixation (2,3) situées aux deux extrémités dudit élément, constituées de gorges essentiellement cylindriques (4,5,6,7,8), ledit soufflet central comprenant des plis dont les flancs sont inclinés de telle manière que lorsque le soufflet est soumis à des mouvements de rotation et de flexion, le lubrifiant contenu dans la gaine soit refoulé vers le joint articulé (12) se trouvant du côté de l'extrémité de la gaine de plus grand diamètre (2),
caractérisée en ce que les surfaces internes des gorges essentiellement cylindriques (5,6,7,8) de fixation comportent des lèvres d'accrochage circulaires (9,9') disposées par paires de façon symétrique par rapport au plan perpendiculaire au plat de chaque gorge cylindrique et passant par le milieu de ladite gorge.

## Description

### Objet de l'invention

La présente invention concerne une nouvelle gaine souple universelle à soufflet pour joint articulé, de préférence pour cardan, ainsi que son système de fixation.

### Arrière-plan technologique et état de la technique

Dans l'industrie automobile, en particulier dans le domaine des pièces de rechange et de la maintenance, on connaît des gaines destinées à la protection de joints lubrifiés de type cardan, à billes, à rotule ou similaires utilisés pour transmettre un mouvement, de préférence rotatif, à des organes mécaniques mobiles.

Les gaines protectrices pour joints articulés sont destinées, d'une part, à protéger les articulations contre l'intrusion de corps étrangers, les chocs et les agressions de l'environnement extérieur en général. D'autre part, ces gaines assurent l'étanchéité et le confinement de la masse lubrifiante nécessaire au bon fonctionnement des articulations, au niveau du joint.

Ces gaines protectrices sont constituées d'un élément tubulaire, généralement en caoutchouc ou élastomère souple, généralement moulé en une seule pièce, constitué d'une partie centrale tronconique présentant des ondulations permettant d'en assurer la flexion et l'extension axiale, et de deux extrémités comportant chacune des zones de fixation cylindriques avec un diamètre intérieur permettant leur raccordement sur des éléments correspondants du joint articulé (arbre, tête de cardan). Ces éléments comportent notamment des gorges formant une assise destinée à recevoir des dispositifs de serrage tels que colliers qui assurent l'étanchéité de l'ensemble.

Dans le domaine du véhicule neuf, on trouve bien entendu des gaines spécifiques aux différentes applications, dépendant du modèle et/ou du gabarit de véhicule.

Sur le marché du remplacement et de la maintenance, afin de réduire le nombre de références, des modèles « universels » sont apparus, pouvant être montés sur une large gamme de joints articulés différant par leur longueur et/ou leur diamètre. Le principe consiste alors à prévoir des zones de fixation à gorges multiples, disposées en gradins et de diamètres différents, comme décrit dans le document EP-A-339 387.

On a par exemple trois zones de fixation de diamètre allant en croissant de l'intérieur vers l'extérieur de la gaine. Dans ce cas, si le petit diamètre ou le diamètre moyen est requis pour le montage sur un véhicule spécifique, la (ou les) zone(s) excédentaire(s) sont éliminées avant montage par simple découpage du caoutchouc ou de l'élastomère.

Les gaines précitées sont soumises en permanence à la force centrifuge résultant de la rotation des articulations ainsi qu'à des déformations axiales et transversales ou de flexion. Ainsi la matière lubrifiante a tendance à s'éloigner des parties du joint proches de l'axe de rotation et des systèmes d'articulation. Une mauvaise étanchéité au niveau de la gaine peut dès lors considérablement en altérer la fiabilité, en aggravant le risque de panne ou en réduisant fortement la longévité de ce type d'organe.

Comme décrit dans le document WO-A-99 25985, afin d'améliorer encore l'étanchéité au niveau des gorges de fixation, la gaine à soufflet est généralement pourvue, côté interne, selon le modèle, d'une lèvre ou de deux lèvres rapprochées qui viennent se loger lors de la fixation dans des rainures usinées sur le joint ou la tête de cardan.

Cependant ce type gaine, largement répandu en Europe par exemple, ne convient pas sur le marché du remplacement de certaines marques non européennes, présentant des modèles de tête de cardan plates ou sans rainures. En effet, dans ce cas, la disposition de la (ou des) lèvre(s) ne permet pas une adhérence satisfaisante de la gaine aux éléments du joint.

### Buts de l'invention

La présente invention a pour but de proposer une solution qui permet de s'affranchir des inconvénients de l'état de la technique.

En particulier l'invention a pour but de proposer une nouvelle gaine souple pour joint articulé présentant une meilleure adhérence et une meilleure étanchéité que dans les solutions de l'état de la technique.

Un but complémentaire de l'invention est de proposer une gaine qui s'adapte sur toutes les têtes de cardan existant, en particulier sur celles qui sont plates et sans rainure(s).

### Principaux éléments caractéristiques de l'invention

La présente invention concerne une gaine souple universelle à soufflet pour joint articulé lubrifié, de préférence de type cardan, destiné à assurer la protection et à garantir la lubrification dudit joint, ladite gaine consistant en un élément tubulaire comprenant un soufflet central tronconique et des zones de fixation situées aux deux extrémités dudit élément, constituées de gorges essentiellement cylindriques, ledit soufflet central comprenant des plis dont les flancs sont inclinés de telle manière que, lorsque le soufflet est soumis à des mouvements de rotation et de flexion, le lubrifiant contenu dans la gaine soit refoulé vers le joint articulé se trouvant du côté de l'extrémité de la gaine de plus grand diamètre, caractérisée en ce que les surfaces internes des gorges essentiellement cylindriques de fixation comportent des lèvres d'accrochage circulaires disposées par paires de façon symétrique par rapport au plan perpendiculaire au plat de chaque gorge cylindrique et passant par le milieu de ladite gorge.

Avantageusement, lesdites lèvres d'accrochage sont positionnées, en regard de chaque gorge, sur la face interne de la gaine, de telle manière que chacune des lèvres dépasse sur sa surface vers le centre de la gorge par rapport à un plan perpendiculaire au plat de celle-ci et passant par le bord correspondant de celle-ci.

De manière particulièrement avantageuse, le dépassement de surface de chaque lèvre vers le centre de la gorge est compris entre 1/5 et 1/3 de la surface totale de la lèvre.

De préférence, le dépassement est de 1/4 de sa surface totale.

Avantageusement, la gaine est réalisée en caoutchouc ou élastomère souple, et de préférence en néoprène®.

La présente invention se rapporte également à un joint articulé destiné à assurer la transmission d'un mouvement, de préférence de rotation, entre deux arbres, de préférence de type cardan, comprenant une gaine souple à soufflet selon l'invention.

Avantageusement, la partie de l'articulation du joint sur laquelle vient se fixer la gaine au niveau de sa zone de fixation essentiellement cylindrique grâce à un collier de serrage est parfaitement plate.

### Brève description des dessins

La figure 1 représente une demi-vue en coupe axiale d'une gaine selon l'état de la technique le plus proche.

La figure 2 représente une vue en perspective d'une gaine selon l'invention.

La figure 3 représente une vue en coupe axiale de la gaine représentée à la figure 2.

La figure 4 est une vue de détail correspondant à la figure 3.

La figure 5.1 représente une vue en élévation de la gaine de la figure 2 montée sur sa tête de cardan. La figure 5.2 représente une vue de détail de la fixation au moyen d'un collier de serrage de la gaine de la figure 2 sur sa tête de cardan.

### Description détaillée de l'invention

La gaine de protection selon l'invention est constituée d'un élément tubulaire comportant un soufflet central tronconique 1, dont les extrémités 2,3 sont munies des zones de fixation. La gaine est fixée au joint articulé au niveau de son diamètre le plus grand (zone 2) et à l'arbre auquel le mouvement est transmis au niveau de son diamètre le plus petit (zone 3).

L'élément tubulaire est réalisé dans un matériau souple compatible avec les lubrifiants utilisés généralement, tel que le caoutchouc ou un élastomère synthétique tel que le poly(chloroprène) ou néoprène®. Le néoprène® est préféré au caoutchouc de par sa meilleure résistance. Les plis du soufflet 1 comportent des flancs inclinés tels que décrits dans l'état de la technique. Les angles déterminant ces flancs sont choisis pour refouler le lubrifiant vers l'articulation lorsque la gaine est soumise à des mouvements de rotation et de flexion.

Les extrémités 2,3 sont chacune composées d'un ou plusieurs éléments essentiellement cylindriques 4,5,6,7,8 de diamètres internes différents et pourvus de gorges externes destinées à recevoir un collier de serrage assurant l'étanchéité de l'ensemble. Ces éléments cylindriques pourront être reliés les uns aux autres par des ondulations déformables 11.

La gaine de protection selon l'invention peut avantageusement être montée sur la tête de cardan sans démontage du cardan ou de celle-ci, en utilisant un cône de montage connu selon l'état de la technique, dont le document WO-A-99 25985, qui présente plusieurs formes d'exécution possibles pour un tel cône.

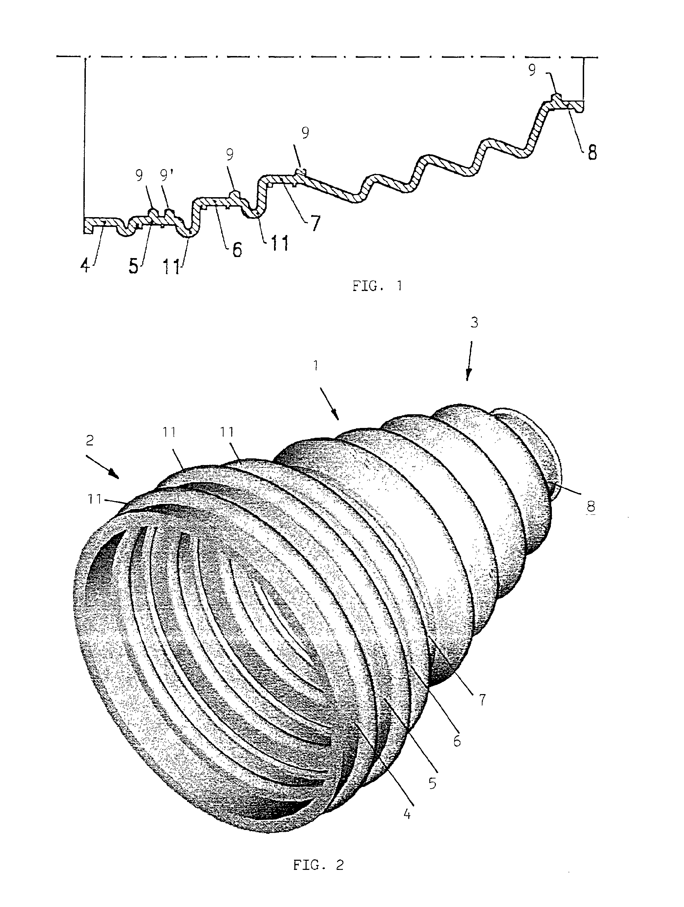

La présente invention se distingue de l'état de la technique le plus proche WO-A-99 25985 (Fig. 1) par le nombre et/ou la position des lèvres ou nervures d'accrochage circulaires 9,9' se trouvant sur la partie interne de la gaine en caoutchouc ou élastomère.

A la figure 1, on voit qu'il peut y avoir dans l'état de la technique soit aucune lèvre (gorge 4), soit une lèvre (gorges 6,7,8), soit éventuellement deux lèvres (gorge 5). En général, les lèvres sont décentrées par rapport au milieu de la gorge. Ces lèvres sont en fait déportées vers le soufflet.

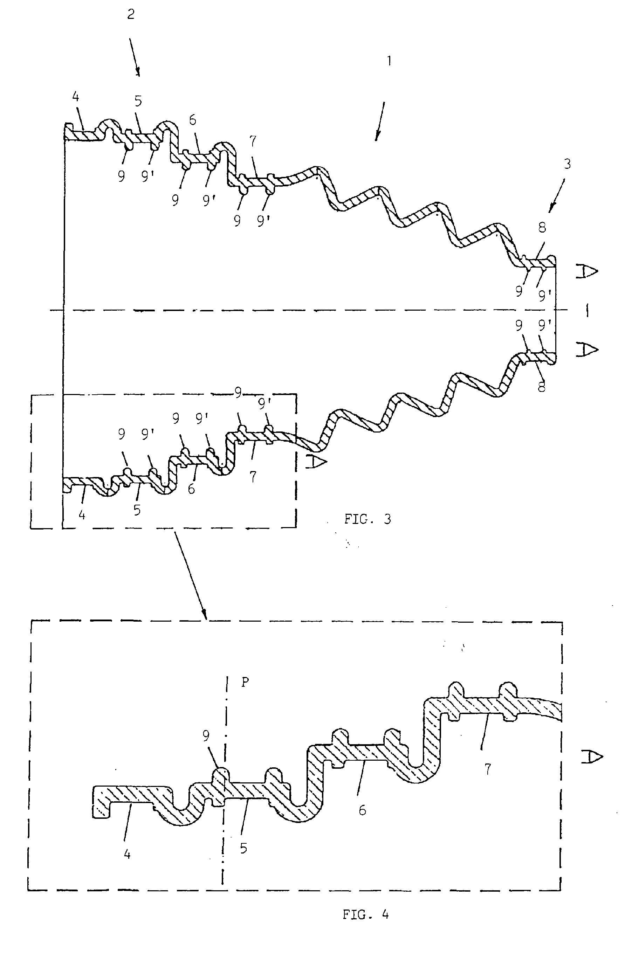

L'invention propose une paire de lèvres 9,9' en vis-à-vis de chaque gorge 5,6,7,8, en position symétrique par rapport au centre de la gorge (Fig. 3). Avantageusement, la lèvre peut déborder (sur un quart de sa surface environ) sur la partie interne de la gaine, vers le centre de la gorge, par rapport à un plan P perpendiculaire passant par chaque extrémité de la gorge (Fig. 4).

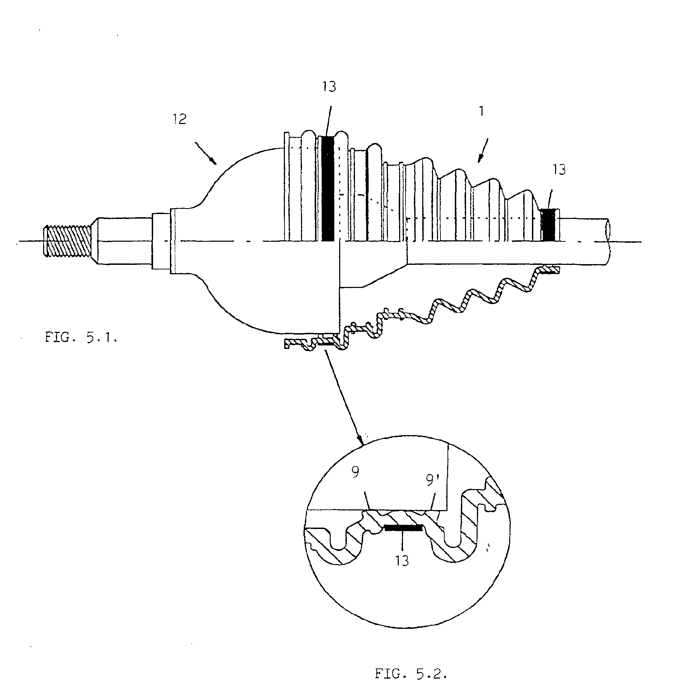

La présence de deux lèvres par gorge permet, lors du placement du collier de serrage 13, d'avoir un écrasement de chaque lèvre avec un écartement de celle-ci vers l'extérieur par rapport au centre de la gorge (Fig. 5.1 et 5.2). Cet écrasement permet d'avoir une bien meilleure adhérence ou « accroche » de la gaine à la tête de cardan lors des différents mouvements de celle-ci et une meilleure étanchéité vis-à-vis du lubrifiant.

Le fait de pourvoir chaque gorge de la gaine 1 de deux lèvres d'accroche 9,9' permet la suppression de rainures ou gorges usinées dans le métal de la tête de cardan 12. Cela permet d'utiliser la gaine universelle également avec les têtes de cardan plates 12 (Fig. 5).

## Revendications

1. Gaine souple universelle à soufflet pour joint articulé lubrifié (12), de préférence de type cardan, destiné à assurer la protection et à garantir la lubrification dudit joint, ladite gaine consistant en un élément tubulaire comprenant un soufflet central tronconique (1) et des zones de fixation (2,3) situées aux deux extrémités dudit élément, constituées de gorges essentiellement cylindriques (4,5,6,7,8), ledit soufflet central comprenant des plis dont les flancs sont inclinés de telle manière que lorsque le soufflet est soumis à des mouvements de rotation et de flexion, le lubrifiant contenu dans la gaine soit refoulé vers le joint articulé (12) se trouvant du côté de l'extrémité de la gaine de plus grand diamètre (2), **caractérisée en ce que** les surfaces internes des gorges essentiellement cylindriques (5,6,7,8) de fixation comportent des lèvres d'accrochage circulaires (9,9') disposées par paires de façon symétrique par rapport au plan perpendiculaire au plat de chaque gorge cylindrique et passant par le milieu de ladite gorge.

2. Gaine selon la revendication 1, **caractérisée en ce que** lesdites lèvres d'accrochage (9,9') sont positionnées, en regard de chaque gorge (5,6,7,8), sur la face interne de la gaine, de telle manière que chacune des lèvres (9,9') dépasse sur sa surface vers le centre de la gorge par rapport à un plan perpendiculaire (P) au plat de celle-ci et passant par le bord correspondant de celle-ci.

3. Gaine selon la revendication 2, **caractérisée en ce que** le dépassement de surface de chaque lèvre (9,9') vers le centre de la gorge est compris entre 1/5 et 1/3 de la surface totale de ladite lèvre.

4. Gaine selon la revendication 3, **caractérisée en ce que** le dépassement est de 1/4 de la surface totale de la lèvre.

5. Gaine selon l'une quelconque des revendications précédentes, **caractérisée en ce qu'**elle est réalisée en caoutchouc ou élastomère souple.

6. Gaine selon la revendication 5, **caractérisée en ce qu'**elle est réalisée en néoprène® .

7. Joint articulé (12) destiné à assurer la transmission d'un mouvement, de préférence de rotation, entre deux arbres, de préférence de type cardan, comprenant une gaine souple à soufflet selon la revendication 1.

8. Joint articulé (12) selon la revendication 7, **caractérisé en ce que** la partie de l'articulation sur laquelle vient se fixer la gaine au niveau de sa zone de fixation essentiellement cylindrique (4,5,6,7,8) grâce à un collier de serrage (13) est parfaitement plate.
